# EUROPÄISCHE PATENTANMELDUNG

(11) **EP 1 512 940 A2**
(43) Veröffentlichungstag der Anmeldung: **09.03.2005**
(21) Anmeldenummer: 04019452.4
(22) Anmeldetag: 17.08.2004
(51) Int. Cl.: G01B 11/03, G01B 11/24, G01S 17/06

(54) **Vorrichtung und Verfahren zur Vermessung von Bauteilen**

(30) Priorität: 03.09.2003 DE 10341042
(71) Anmelder: CLAAS Fertigungstechnik GmbH, 48361 Beelen (DE)
(72) Erfinder: Martinschledde, Ludger, 33397 Rietberg-Bokel (DE); Herrmann, Günter, 33335 Gütersloh (DE); Eckstein, Jürgen, 33775 Versmold (DE)

(57) **Zusammenfassung**

Die Erfindung betrifft eine Vorrichtung, und ein Verfahren zur Vermessung von Bauteilen (35) mittels zumindest einem mit einem Manipulator (2) in Wirkverbindung stehenden Messsystem (20), wobei dem Manipulator (2) wenigstens eine nach dem Laser-lichtschnittverfahren arbeitende Konturmesseinrichtung (20) zugeordnet ist, welche eine optische, einen Messbereich (30) überstreichende Sensierfläche (24) generiert und wobei in dem Messbereich (30) zumindest ein Messobjekt (36) und wenigstens ein dem Messobjekt (36) zugeordnetes Referenzmerkmal (38) angeordnet sind. Auf diese Weise wird sichergestellt, dass die Ermittlung des Abstandes und/oder der Lage des Messobjektes (36) zu dem Referenzmerkmal (38) unabhängig von der Bewegung des Manipulators (2) erfolgt. Dies hat insbesondere den Vorteil, dass die Vermessung des Messobjektes (36) unabhängig von Lageabweichungen des Manipulators (2) erfolgt.

## Beschreibung

Die Erfindung betrifft eine Vorrichtung sowie ein Verfahren zur Vermessung von Bauteilen nach dem Oberbegriff der Ansprüche 1 und 14.

Modernen Montage- und Fertigungsprozessen basieren zunehmend auf dem Einsatz von Montage- und Fertigungsrobotern, deren Aktoren zum Erreichen einer hohen räumlichen Bewegungsflexibilität des Roboters um eine Vielzahl von Schwenkachsen drehbeweglich in ihrer Lage veränderbar sind. Die immer komplexer werdenden Produktionsprozesse stellen jedoch auch hohe Anforderungen an die Präzision der Bewegung der Roboteraktoren. Dabei nimmt die Präzision der Bewegung mit zunehmender Anzahl von Schwenkachsen zum Teil erheblich ab. Zurückzuführen ist dieses Verhalten im Wesentlichen auf die Vielzahl von Roboterbauteilen und deren Bauteiltoleranzen sowie die steigende Anzahl von Schwenkachslagerungen und deren Lagerspiele. Damit derartige Robotersysteme dennoch hochpräzise Bewegungen ausführen können, müssen sie zum Teil durch sehr aufwendige Kalibrierverfahren in definierten zeitlichen Abständen nachjustiert werden.

In der Vergangenheit wurden vielfältige Anstrengungen unternommen, diese Kalibrierverfahren zu vereinfachen. Aus der EP 1 302 285 ist beispielsweise ein solches Kalibrierverfahren bekannt geworden, welches unter Verwendung komplexer mathematischer Zusammenhänge ein effizientes und dennoch einfach strukturiertes Kalibrierverfahren zum Nachjustieren von Roboterbewegungen offenbart. Aufgrund der komplexen mathematischen Zusammenhänge sind derartige Kalibrierverfahren dennoch nicht geeignet, die Präzision der Bewegung von Montage- und Fertigungsrobotern in einem Maß zu verbessern, dass ihnen Aktoren zuordenbar wären, die hochpräzise Bauteilvermessungen ermöglichen. Zur Durchführung hochpräziser Bauteilvermessungen haben sich deshalb Messverfahren etabliert, die in sogenannten Messräumen unter laborartigen Bedingungen durchgeführt werden. Neben einem hohen Zeitaufwand für die Abarbeitung derartiger Messmethoden haben sie vor allem den Nachteil, dass sie nur eingeschränkt in Montage- oder Fertigungslinien integrierbar sind. Demgegenüber wären Robotersysteme, deren Sensoren hochpräzise Messungen durchführen können, gut für die Integration in Montage- und Fertigungslinien geeignet, jedoch steht einer solchen Integration die unzureichend präzise Bewegung der Robotersegmente entgegen.

Der Erfindung liegt deshalb die Aufgabe zugrunde, ein robotergeführtes Messsystems vorzuschlagen, welches die beschriebenen Nachteile des Standes der Technik vermeidet und die große Flexibilität in der Bewegung von Robotersystemen mit der Messgenauigkeit hochpräziser Messverfahren verbindet.

Erfindungsgemäß wird die Aufgabe durch eine Vorrichtung und ein Verfahren mit den kennzeichnenden Merkmalen der Ansprüche 1 und 14 gelöst.

Indem dem Manipulator wenigstens eine Konturmesseinrichtung zugeordnet ist, welche eine optische, einen Messbereich überstreichende Sensierfläche generiert und wobei in dem Messbereich zumindest ein Messobjekt und wenigstens ein dem Messobjekt zugeordnetes Referenzmerkmal angeordnet sind, wird sichergestellt, dass die Ermittlung des Abstandes und/oder der Lage des Messobjektes zu dem Referenzmerkmal unabhängig von der Bewegung des Manipulators erfolgt. Dies hat insbesondere den Vorteil, dass die Vermessung des Messobjektes unabhängig von Lageabweichungen des Manipulators erfolgt.

Eine besonders hohe Flexibilität in der Vermessung von komplex gestalteten Bauteilen wird dann erreicht, wenn der Manipulator als mehrachsiges Handhabungsgerät ausgeführt ist, welches sehr flexibel verschiedenste Bauteilpositionen anfahren kann.

Eine konstruktiv einfach umsetzbare hochpräzise Vermessung eines Bauteils wird in vorteilhafter Weiterbildung der Erfindung dann erreicht, wenn die Konturmesseinrichtung zumindest eine Signalquelle zur Generierung der optischen Sensierfläche und wenigstens eine den Schnittbereich der Sensierfläche mit dem Messbereich wiedergebende Registriereinheit umfasst.

Auf konstruktive einfache Weise kann die Signalquelle als an sich bekannter nach dem Lichtschnittprinzip arbeitender Lasersensor ausgeführt sein.

Eine konstruktiv besonders einfache Ausführung der Registriereinheit ergibt sich dann, wenn die Registriereinheit in an sich bekannter Weise ein mit einem Detektor in Wirkverbindung stehendes Objektiv umfasst, wobei der Detektor die sich in der Kontaktzone zwischen Sensierfläche und Messbereich ergebende Schnittfläche erfasst und zur Weiterverarbeitung als elektronisches Ausgangssignal verfügbar macht.

Das Überstreichen des Messbereichs durch die Sensierfläche kann in vorteilhafter Weiterbildung der Erfindung konstruktiv besonders einfach dadurch erreicht werden, dass die Konturmesseinrichtung entweder linear verfahrbar oder um eine horizontale Achse schwenkbar an dem Manipulator angeordnet ist.

In einer weiteren vorteilhaften Ausgestaltung der Erfindung kann auch der Messbereich linear verfahrbar ausgeführt sein, sodass der Messbereich durch eine von einer ortsfest am Manipulator angeordnete Konturmesseinrichtung generierte ebenfalls ortsfeste Sensierfläche geführt wird. Dies hat insbesondere den Vorteil, dass die an dem schwenkbeweglich ausgeführten Manipulator anzuordnende Konturmesseinrichtung leichter ausgeführt werden kann, was letztlich die von dem Manipulator zu bewegenden Massen reduziert.

Die Flexibilität und Genauigkeit der erfindungsgemäßen Messvorrichtung kann auch dadurch noch gesteigert werden, dass der Messbereich räumlich von dem Manipulator getrennt und in beliebiger Lage im Raum angeordnet ist.

Indem nach einer weiteren vorteilhaften Ausgestaltung der Erfindung dem Bauteil eine Vielzahl von Messobjekten mit zugehörigen Referenzmerkmalen zugeordnet sind, kann die Effizienz der Bauteilvermessung weiter gesteigert werden.

In vorteilhafter Weiterbildung der Erfindung bilden die Messobjekte definierte Geometrien des Bauteils, sodass neben Punkten, auch sich in den Raum erstreckende Linien, sowie ganze Flächen des Bauteils vermessen werden können.

Damit der Abstand des Messobjektes zum Referenzmerkmal durch einfach strukturierte Datenverarbeitungssysteme ermittelt werden kann, werden die Referenzmerkmale durch ortsfeste geometrische Referenzpunkte verkörpert, deren Lage im Raum in dem Messsystem hinterlegt ist, wobei die Referenzpunkte konstruktiv im einfachsten Fall als geeignet geformte geometrische Köper ausgebildet sind, deren Lage im Messbereich änderbar ist.

Ein besonders einfaches, genaues und effizientes Verfahren zur Vermessung von Bauteilen ergibt sich dann, wenn in dem Messbereich zumindest ein Messobjekt und wenigstens ein dem Messobjekt zugeordnetes Referenzmerkmal angeordnet sind, die von einer Sensierfläche überstrichen werden, die von einer mit einem Manipulator in Wirkverbindung stehenden Konturmesseinrichtung generiert wird und wobei die Konturmesseinrichtung die räumliche Lage des Messobjektes zu dem Referenzmerkmal ermittelt.

Die Genauigkeit des erfindungsgemäßen Verfahrens ist dann besonders hoch, wenn der Manipulator während des Messvorganges in Ruheposition verharrt und die mit dem Manipulator in Wirkverbindung stehende Konturmesseinrichtung ihre Position relativ zu dem Manipulator ändern kann.

Indem die räumliche Lage der Geometrie des Messobjektes teilweise oder vollständig in einem räumlichen Koordinatensystem abgebildet wird und die Konturmesseinrichtung diese räumliche Lage als Ausgangssignal verfügbar macht, können diese Messdaten auch zur qualitativen Beurteilung der Geometrie des Messobjektes herangezogen werden. Dies ist besonders dann von großem Vorteil, wenn Form- und Lageabweichungen der Messobjekte bestimmt werden sollen.

Weitere vorteilhafte Ausgestaltungen sind Gegenstand weiterer Unteransprüche und werden nachfolgend an Hand eines in Zeichnungen dargestellten Ausführungsbeispiels näher erläutert.

Es zeigen
- Figur 1: einen Manipulator mit erfindungsgemäßer Konturmesseinrichtung
- Figur 2: eine weitere Ausführung eines Manipulators mit erfindungsgemäßer Konturmesseinrichtung
- Figur 3: die Darstellung der Vermessung eines Bauteils mit komplexer geometrischer Struktur

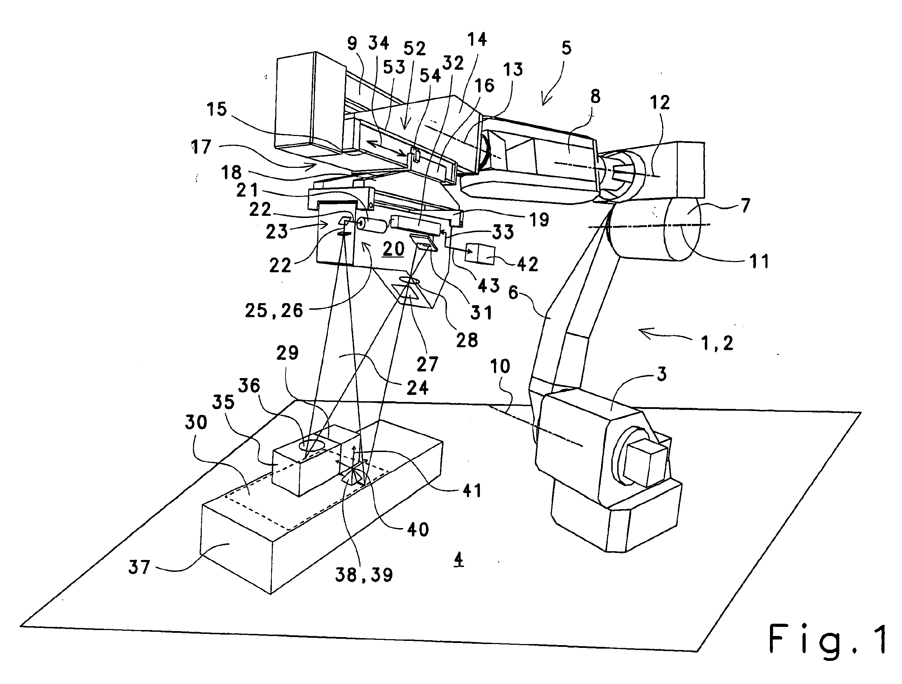

Figur 1 zeigt einen als Montage- und Fertigungsroboter 1, nachfolgend kurz Arbeitsroboter 1 genannt, ausgeführten Manipulator 2, der untenseitig über einen Sockel 3 ortsfest im Boden 4 verankert ist. Dem Arbeitsroboter 1 sind in an sich bekannter Weise den Werkzeugträger 5 bildende Segmente 6 - 9 zugeordnet, die um eine Vielzahl horizontaler und vertikaler Schwenkachsen 10 - 13 bewegbar sind. Im dargestellten Ausführungsbeispiel nimmt das äußere Segment 9 des Arbeitsroboters 1 eine tragwerkartig gestaltete Haltevorrichtung 14, der untenseitig ein von einer Führungsschiene 15 und einem diese Führungsschiene 15 umgreifenden Führungsschlitten 16 gebildetes Linearführungssystem 17 auf. Dem Führungsschlitten 16 des Linearführungssystems 17 ist in seinem untenseitigen Bereich eine ebenfalls tragwerkartig ausgeführte Haltevorrichtung 18 zugeordnet, die mit dem Führungsschlitten 17 im einfachsten Fall durch nicht dargestellte Verschraubungen fest verbunden ist. Der weiteren Haltevorrichtung 18 sind in ihrem dem Führungsschlitten 16 abgewandten Bereich Adaptiersockel 19 angeformt, die in erfindungsgemäßer Weise eine Konturmesseinrichtung 20 drehfest aufnehmen. Die Konturmesseinrichtung 20 umfasst in an sich bekannter Weise eine Laserstrahlquelle 21, deren Laserstrahl 22 über ein Spiegel-Linsensystem 23 umgelenkt und aufgespalten wird, wobei sich die erfindungsgemäße Sensierfläche 24 ergibt. Ein derartiges Verfahren wird auch Laserlichtschnittverfahren und die die Sensierfläche 24 generierende Sensoreinheit 25 auch Laserlichtschnittsensor 26 genannt. Es liegt im Rahmen der Erfindung, dass hier auch andere optische Verfahren zum Einsatz kommen können, die entweder auch ein flächiges oder ein punktförmiges Sensierfeld generieren. Zudem nimmt die Konturmesseinrichtung in ihrem der Sensoreinheit 25 abgewandten Bereich ein von einem Sichtfenster 27 geschütztes Objektiv 28 auf, welches in noch näher zu beschreibender Weise den Schnittbereich 29 zwischen Sensierfläche 24 und Messbereich 30 erfassen und an einen Detektor 31 weiterleiten kann, wobei der Detektor 31 die Schnittfläche 29 abbildet und über eine elektronische Signaleinheit 32 als Ausgangssignale 33 zur weiteren Verarbeitung verfügbar macht.

In erfindungsgemäßer Weise überstreicht die Sensierfläche 24 der Konturmesseinrichtung einen Messbereich 30, wobei die Größe des Messbereiches vom Grad der Auffächerung des Laserstrahls 22 in dem Spiegel-Linsensystem 23 und dem Verfahrweg 34 des Führungsschlittens 16 des Linearführungssystems 17 abhängt. In dem so gebildeten Messbereich 30 ist erfindungsgemäß zumindest ein Bauteil 35 angeordnet, welches über wenigstens ein in dem Messbereich 30 liegendes Messobjekt 36 verfügt, welches von der Sensierfläche 24 der linear verfahrbaren Konturmesseinrichtung 20 überstrichen wird. Das in Figur 1 nur schematisch dargestellte Bauteil 35 ist im einfachsten Fall in nicht dargestellter Weise in einen Bauteilträger 37 eingeschraubt oder in anderer, geeigneter Weise in dem Bauteilträger 37 fixiert sein. Zugleich nimmt der räumlich von dem Arbeitsroboter 1 getrennte Bauteilträger 37 das erfindungsgemäße Referenzmerkmal 38 auf, wobei das Referenzmerkmal 38 nach Figur 1 als pyramidenförmiger geometrischer Körper 39 ausgebildet ist, dessen punktförmig auslaufender Kopfbereich den das Referenzmerkmal 38 bildenden Referenzpunkt 40 darstellt. Im einfachsten Fall ist der pyramidenförmige geometrische Körper 39 ebenfalls in den Bauteilträger 37 eingeschraubt, wobei die Lage dieses Körpers 39 so gewählt ist, dass das Referenzmerkmal 38 zumindest einem Messobjekt 36 des Bauteils 35 zugeordnet ist und ebenfalls innerhalb des von der Sensierfläche 24 überstrichenen Messbereichs 30 liegt. Indem die Lage des Referenzmerkmals 38 in einem räumlichen Koordinatensystem 41 festgelegt ist, und diese Raumkoordinaten in einer Verrechnungseinheit 42 hinterlegt sind, wird es möglich, mittels der Konturmesseinrichtung 20 Abstandskoordinaten und/oder Raumkoordinatendes dem jeweiligen Referenzmerkmal 38 zugeordneten Messobjektes 36 zu dem Referenzmerkmal 38 zu bestimmen. Einfachstenfalls können die Raumkoordinaten des Messobjektes 36 in der Verrechnungseinheit 42 bestimmt werden, wobei dies erfordert, dass die die Lage des Schnittbereiches 29 zwischen Messbereich 30 und Sensierfläche 24 kodierenden Ausgangssignale 33 über an sich bekannte Datenübertragungssysteme 43 der Verrechnungseinheit 42 verfügbar gemacht werden.

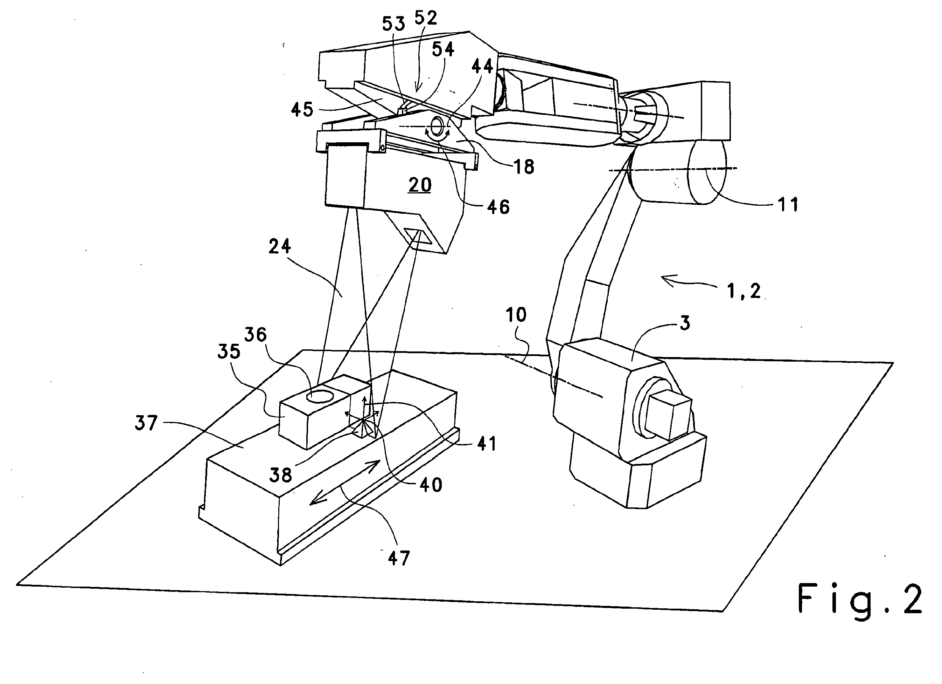

Gemäß Figur 2 ist es auch möglich, dass die die Konturmesseinrichtung 20 aufnehmende Haltevorrichtung 18 obenseitig eine Schwenkachse 44 aufnimmt, die von einer mit dem vorderen Segment 9 des Arbeitsroboters 1 verbundenen Flanschlagerung 45 aufgenommen wird. In nicht näher dargestellter Weise kann ein Antrieb vorgesehen sein, der die Konturmesseinrichtung 20 gemäß Pfeilrichtung 46 um die Schwenkachse 44 verschwenkbar führt. In diesem Fall kann das Linearführungssystem 17 nach Figur 1 entfallen. Es ist auch denkbar, die Konturmesseinrichtung 20 starr an dem Arbeitsroboter 1 anzuordnen und den Bauteilträger 37 mit den auf ihm fixierten Bauteil 35 und den Referenzmerkmalen 38 linear gemäß Pfeilrichtung 47 in der Weise zu verschieben, dass zumindest das wenigstens eine Messobjekt 36 des Bauteils 35 und das dem Messobjekt 36 zugeordnete Referenzmerkmal 38 durch die Sensierfläche 24 der Konturmesseinrichtung 20 geführt wird. Damit schließlich hochpräzise Raum- und/oder Lagekoordinaten der Messobjekte 36 generiert werden können ist es zudem erforderlich, dass die Lageänderung der Sensierfläche 24 sensorisch erfasst und an die Verrechnungseinheit 42 übermittelt wird. In an sich bekannter und deshalb nicht näher dargestellter Weise kann diese Lageänderungsermittlung mittels eines Wegmesssystems 52 bestimmt werden. Je nachdem, ob die Position der Konturmesseinrichtung 20 mittels eines Linearführungssystems 17 oder einer Schwenkachse 44 änderbar ist, sind der jeweiligen Haltevorrichtung 18 linear oder kreisförmig ausgebildete Maßstäbe 53 zugeordnet, deren nicht näher dargestellte Markierungen durch an den bewegten Haltevorrichtungen 18 angeordnete Lagesensoren 54 abgegriffen werden. Dabei sind die Maßstäbe 53 in der Regel aus Glas, wobei die Markierungen in der Regel eingraviert oder eingefräst sind.

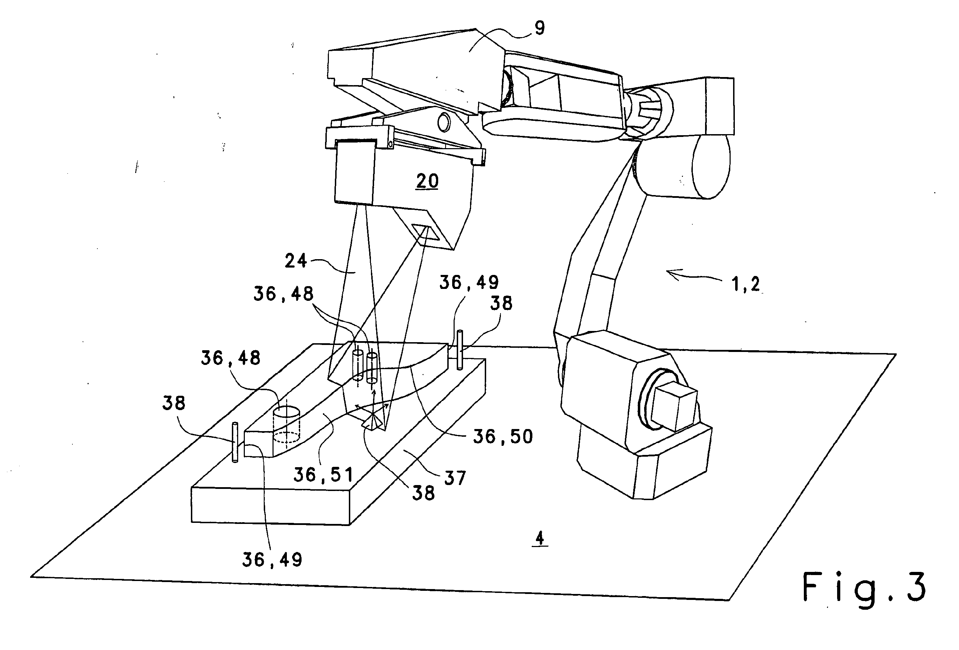

Figur 3 zeigt eine weitere Ausführungsform der in den Figuren 1 und 2 schematisch dargestellten erfindungsgemäßen Vorrichtung. Der Bauteilträger 37 ist auf dem Boden 4 fixiert und zugleich unabhängig von dem als Arbeitsroboter 1 ausgeführten Manipulator 2 angeordnet. Der Bauteilträger verfügt über eine Vielzahl stabförmiger Referenzmerkmale 38, die in einer festen Position an dem Bauteilträger 37 angeordnet sind und zugleich einer Vielzahl von Messobjekten 36 zuordenbar sind. Aufgrund der komplexen Form des Bauteils 35 nehmen die Referenzmerkmale 38 verschiedene Positionen im Raum ein. Damit nun die Messobjekte 36 und die ihnen zugeordneten Referenzmerkmale 38 durch die Konturmesseinrichtung 20 vermessen werden können, muss das vordere Segment 9 des Arbeitsroboters 1 in verschiedene Positionen verbracht werden. Die jeweils erforderliche Position wird durch die Lage der Messobjekte 36 und die ihnen jeweils zugeordneten Referenzmerkmale 38 bestimmt, da stets gewährleistet sein muss, dass die Sensierfläche 24 der Konturmesseinrichtung 20 wenigstens die zusammengehörenden Messobjekte 36 und Referenzmerkmale 38 in der zuvor beschriebenen Weise überstreicht.

Wie aus Figur 3 ersichtlich, können die zu vermessenden Messobjekte verschiedenste Geometrien aufweisen. Die Messobjekte können einerseits einfache Geometrien wie Bohrungen 48 oder geradlinige Kantenabmessungen 49 umfassen. Aufgrund der hohen Präzision derartiger laserbasierter Konturmesseinrichtungen 20 ist es aber auch möglich, dass die Messobjekte 36 komplizierte geometrische Formen wie etwa im Raum verlaufende dreidimensionale Krümmungen von Kanten 50 oder Flächen 51 umfassen. Zudem ermöglicht das erfindungsgemäße Verfahren die Überprüfung sogenannter Form- und Lagetoleranzen von verschiedenen Messobjekten 36 zueinander, wie etwa das Fluchten von Bohrungen 48, die beispielsweise von einer gemeinsame Schwenkachse durchsetzt werden sollen. Eine weitere vorteilhafte Anwendung des Verfahrens ergibt sich bei der Überprüfung der Lage und Form von Schweißnähten, die unter Einsatz des erfindungsgemäßen Verfahrens im laufenden Montage- oder Fertigungsprozess überprüft werden können, ohne dass hier komplizierte, speziell auf das Vermessen von Schweißnähten ausgerichtete Messverfahren zum Einsatz kommen müssen.

### Bezugszeichenliste

- 1: Arbeitsroboter
- 2: Manipulator
- 3: Sockel
- 4: Boden
- 5: Werkzeugträger
- 6 - 9: Segmente
- 10 - 13: Schwenkachsen
- 14: Haltevorrichtung
- 15: Führungsschiene
- 16: Führungsschlitten
- 17: Linearführungssystem
- 18: Haltevorrichtung
- 19: Adaptiersockel
- 20: Konturmesseinrichtung
- 21: Laserstrahlquelle
- 22: Laserstrahl
- 23: Spiegel-Linsensystem
- 24: Sensierfläche
- 25: Sensoreinheit
- 26: Laserlichtschnittsensor
- 27: Sichtfenster
- 28: Objektiv
- 29: Schnittbereich
- 30: Messbereich
- 31: Detektor
- 32: Signaleinheit
- 33: Ausgangssignal
- 34: Verfahrweg
- 35: Bauteil
- 36: Messobjekt
- 37: Bauteilträger
- 38: Referenzmerkmal
- 39: geometrischer Körper
- 40: Referenzpunkt
- 41: Koordinatensystem
- 42: Verrechnungseinheit
- 43: Datenübertragungssystem
- 44: Schwenkachse
- 45: Flanschlagerung
- 46: Pfeilrichtung
- 47: Pfeilrichtung
- 48: Bohrung
- 49: Kante
- 50: Kante
- 51: Fläche

## Patentansprüche

1. Vorrichtung zur Vermessung von Bauteilen mittels zumindest einem mit einem Manipulator in Wirkverbindung stehenden Messsystem,
**dadurch gekennzeichnet,**
**dass** dem Manipulator (2) wenigstens eine Konturmesseinrichtung (20) zugeordnet ist, welche eine optische, einen Messbereich (30) überstreichende Sensierfläche (24) generiert und wobei in dem Messbereich (30) zumindest ein Messobjekt (36) und wenigstens ein dem Messobjekt (36) zugeordnetes Referenzmerkmal (38) angeordnet sind.

2. Vorrichtung zur Vermessung von Bauteilen nach Anspruch 1,
**dadurch gekennzeichnet,**
**dass** der Manipulator (2) als mehrachsiger Arbeitsroboter (1) ausgebildet ist.

3. Vorrichtung zur Vermessung von Bauteilen nach einem der vorhergehenden Ansprüche,
**dadurch gekennzeichnet,**
**dass** die wenigstens eine Konturmesseinrichtung (20) zumindest eine Signalquelle (21, 22, 23) zur Generierung der optischen Sensierfläche (24) und zumindest eine den Schnittbereich (29) der Sensierfläche (24) mit dem Messbereich (30) wiedergebende Registriereinheit (28, 31, 32) umfasst.

4. Vorrichtung zur Vermessung von Bauteilen nach Anspruch 3,
**dadurch gekennzeichnet,**
**dass** die Signalquelle (21 - 23) als Lasersensor (25) ausgebildet ist.

5. Vorrichtung zur Vermessung von Bauteilen nach Anspruch 4,
**dadurch gekennzeichnet,**
**dass** der Lasersensor (25) als Laserlichtschnittsensor (26) ausgebildet ist.

6. Vorrichtung zur Vermessung von Bauteilen nach Anspruch 3,
**dadurch gekennzeichnet,**
**dass** die Registriereinheit (28, 31, 32) ein mit einem Detektor (31) in Wirkverbindung stehendes Objektiv (28) umfasst, wobei der Detektor (31) den Schnittbereich (29) erfasst und zur Weiterverarbeitung als elektronisches Ausgangssignal (33) verfügbar macht.

7. Vorrichtung zur Vermessung von Bauteilen nach einem der vorhergehenden Ansprüche,
**dadurch gekennzeichnet,**
**dass** die Konturmesseinrichtung (20) linear verfahrbar und/oder um eine Schwenkachse (44) schwenkbar an dem Manipulator (1, 2) angeordnet ist.

8. Vorrichtung zur Vermessung von Bauteilen nach einem der vorhergehenden Ansprüche,
**dadurch gekennzeichnet,**
**dass** das Bauteil (35) von einem Bauteilträger (37) aufgenommen wird und der Bauteilträger (37) linear verfahrbar angeordnet ist.

9. Vorrichtung zur Vermessung von Bauteilen nach einem der vorhergehenden Ansprüche,
**dadurch gekennzeichnet,**
**dass** der Messbereich (30) räumlich getrennt von dem Manipulator (1, 2) angeordnet ist und eine beliebige Lage im Raum einnimmt.

10. Vorrichtung zur Vermessung von Bauteilen nach einem der vorhergehenden Ansprüche,
**dadurch gekennzeichnet,**
**dass** an dem Bauteil (35) eine Vielzahl von Messobjekten (36) und diesen zugeordnete Referenzmerkmale (28) angeordnet sind.

11. Vorrichtung zur Vermessung von Bauteilen nach einem der vorhergehenden Ansprüche,
**dadurch gekennzeichnet,**
**dass** das oder die Messobjekte (36) definierte Geometrien (48-51) eines Bauteils (35) bilden.

12. Vorrichtung zur Vermessung von Bauteilen nach einem der vorhergehenden Ansprüche,
**dadurch gekennzeichnet,**
**dass** das oder die Referenzmerkmale (38) ortsfeste geometrische Referenzpunkte (40) verkörpern, die in einer Verrechnungseinheit (42) in ihrer Lage im Raum hinterlegt sind.

13. Vorrichtung zur Vermessung von Bauteilen nach einem der vorhergehenden Ansprüche,
**dadurch gekennzeichnet,**
**dass** die Referenzmerkmale (38) als geometrische Körper (39) ausgebildet sind, deren Lage im Messbereich (30) änderbar ist.

14. Verfahren zur Vermessung von Bauteilen mittels zumindest einem mit einem Manipulator in Wirkverbindung stehenden Messsystem,
**dadurch gekennzeichnet,**
**dass** in einem Messbereich (30) zumindest ein Messobjekt (36) und wenigstens ein dem Messobjekt (36) zugeordnetes Referenzmerkmal (38) angeordnet sind, die von einer Sensierfläche (24) überstrichen werden, die von einer mit einem Manipulator (1, 2) in Wirkverbindung stehenden Konturmesseinrichtung (20) generiert wird und wobei die Konturmesseinrichtung (20) die räumliche Lage des Messobjektes (36) zu dem Referenzmerkmal (38) ermittelt.

15. Verfahren zur Vermessung von Bauteilen nach Anspruch 14,
**dadurch gekennzeichnet,**
**dass** der Manipulator (1, 2) während des Messvorganges in Ruheposition verharrt und die mit dem Manipulator (1, 2) in Wirkverbindung stehende Konturmesseinrichtung (20) ihre Position relativ zu dem Manipulator (1, 2) ändern kann.

16. Verfahren zur Vermessung von Bauteilen nach einem der Ansprüche 14-15,
**dadurch gekennzeichnet,**
**dass** die räumliche Lage der Geometrie (48-51) des (36) teilweise oder vollständig in einem räumlichen Koordinatensystem (41) abgebildet wird und die Konturmesseinrichtung (20) diese räumliche Lage als Ausgangssignal (33) verfügbar macht.

17. Verfahren zur Vermessung von Bauteilen nach einem der Ansprüche 14-16,
**dadurch gekennzeichnet,**
**dass** die räumliche Lage des Messobjektes (36) zur qualitativen Beurteilung der Geometrie (48-51) des Messobjektes (36) herangezogen wird.

18. Verfahren zur Vermessung von Bauteilen nach Anspruch 15,
**dadurch gekennzeichnet,**
**dass** die qualitative Beurteilung die Ermittlung von Form- und Lageabweichungen umfasst.
